# EUROPÄISCHE PATENTSCHRIFT

(11) **EP 2 767 394 B1**
(45) Veröffentlichungstag und Bekanntmachung des Hinweises auf die Patenterteilung: **21.09.2016**
(21) Anmeldenummer: 14154789.3
(22) Anmeldetag: 12.02.2014
(51) Int. Cl.: B32B 17/10, C03C 27/12

(54) **VERFAHREN ZUR HERSTELLUNG VON VERBUNDGLASLAMINATEN MIT SCHALLDÄMMEIGENSCHAFTEN DURCH LAMINIEREN VON GLASSCHEIBEN MIT MINDESTENS EINER DÜNNEN WEICHMACHERARMEN SCHICHT AUF BASIS VON POLYVINYLACETAL UND MINDESTENS EINER WEITEREN SCHICHT AUS WEICHMACHERHALTIGEM POLYVINYLACETAL**
PROCESS FOR THE PREPARATION OF GLASS LAMINATES WITH SOUND DAMPENING PROPERTIES BY LAMINATING GLASS PANES WITH AT LEAST ONE THIN POLYVINYL ACETAL LAYER CONTAINING A LOW CONTENT OF PLASTICIZER AND AT LEAST ONE FURTHER POLYVINYL ACETAL LAYER CONTAINING PLASTICIZER
PROCÉDÉ DE FABRICATION DE LAMINÉ EN VERRE COMPOSITE DOTÉ DE PROPRIÉTÉS D'INSONORISATION PAR COLLAGE DE VITRES AVEC AU MOINS UNE COUCHE FINE PAUVRE EN PLASTIFIANT À BASE DE POLYVINYLACÉTAL ET AU MOINS UNE AUTRE COUCHE À BASE DE POLYVINYLACÉTAL CONTENANT UN PLASTIFIANT

(30) Priorität: 14.02.2013 EP 13155178
(43) Veröffentlichungstag der Anmeldung: 20.08.2014
(73) Patentinhaber: Kuraray Europe GmbH, 65795 Hattersheim (DE)
(72) Erfinder: Keller, Uwe, 53177 Bonn (DE)
(74) Vertreter: Kisters, Michael Marcus

(56) Entgegenhaltungen:
- EP-A1- 2 153 989
- WO-A1-03/097347
- DE-A1-102004 000 023
- DE-A1-102004 000 053
- JP-A- 2004 143 008
- US-A1- 2008 268 270
- US-A1- 2012 244 364

## Beschreibung

Verfahren zur Herstellung von Verbundglaslaminaten mit Schalldämmeigenschaften durch Verkleben von Glasscheiben mit mindestens einer dünnen weichmacherarmen Schicht auf Basis von Polyvinylacetal und mindestens einer weiteren Schicht aus weichmacherhaltigem Polyvinylacetal.

### Technisches Gebiet

Die vorliegende Erfindung betrifft ein Verfahren zur Herstellung von Verbundglasscheiben unter Kombination von Schichten unterschiedlichen Weichmachergehaltes auf Basis von Polyvinylacetalen unterschiedlicher Affinität zu Weichmachern mit anschließender Migration des Weichmachers zwischen den Schichten.

Zur Herstellung von Verbundglasscheiben mit schalldämmenden oder penetrationsfesten Eigenschaften sind Folienlaminate mit mehreren Schichten auf Basis von weichmacherhaltigem Polyvinylacetalen bekannt. Die Schichten in diesen Folienlaminaten weisen je nach Anwendungsbereich unterschiedliche mechanische Eigenschaften auf. So besitzt in der Regel ein Folienlaminat zur Herstellung von schalldämmenden Verglasungen eine gegenüber den Außenschichten weiche Mittelschicht. Penetrationsfeste Folienlaminate können einen umgekehrten Aufbau aufweisen.

Die Herstellung von Folienlaminaten durch Kombination von PVB-Teilfolien ist aus DE 102004000023A1, WO 03/097347 A1, EP 0566890 B1 und EP 0508864 B1 bekannt. Hier werden Teilfolien aus identischen PVB-Polymeren mit unterschiedlichen Weichmachern kombiniert (DE 102004000023A1, WO 03/097347 A1, EP 0508864 B1) bzw. PVB-Polymere mit hohem Restacetatgehalt eingesetzt (EP 0566890 B1).

In diesen Publikationen wird zur Herstellung von Folienlaminaten die Kombination von mehreren Schichten auf Basis von weichmacherhaltigem Polyvinylacetalen vorgeschlagen. Da stark weichmacherhaltiges Polyvinylacetal sehr klebrig und weich ist (d.h. mechanisch instabil) ist die Kombination von Schichten aus diesem Material ein schwieriger Prozess. In der industriellen Praxis hat sich deshalb die Herstellung von Schalldämmfolie durch Koextrusion durchgesetzt. Hierbei ist die klebrige Schicht mit hohem Weichmachergehalt, niedriger Glasübergangstemperatur, hoher Dehnbarkeit und einem mechanischem Dämpfungsmaximum im Bereich Raumtemperatur, von zwei Lagen wenig klebriger PVB-Folie umschlossen, so dass die Handhabbarkeit solch einer tri-layer Folie beim Auf- und Abwickeln, beim Auflegen auf Glas usw. weitgehend durch die Eigenschaften der zwei außen liegenden Lagen normal weicher PVB-Folie bestimmt wird. Demgegenüber wäre die Handhabung einer dünnen, stark weichmacherhaltigen PVB-Schicht mit einer Glasübergangstemperatur unterhalb 10°C wegen ihrer starken Klebrigkeit und viel zu geringen Zugfestigkeit unter praktischen Gesichtspunkten unmöglich.

Co-extrudierte Schalldämmfolien können gut gehandhabt und zwischen Glasscheiben laminiert werden. Ein bedeutender Nachteil erwächst bei diesen mehrlagigen Produkten jedoch aus ihrer stark eingeschränkten Recyclingfähigkeit. Die zur Aufrechterhaltung zweier unterschiedlicher Glasübergangstemperaturen nötige Ungleichverteilung des Weichmachers zwischen den miteinander in Kontakt stehenden Folienlagen erfordert einen Polaritätsunterschied der in den jeweiligen schichten eingesetzten Polyvinylacetale, welcher im allgemeinen durch unterschiedlichen Restacetatgehalt und/oder Acetalisierungsgrad des Polyvinylacetals eingestellt wird. Der Polaritätsunterschied führt aber dazu, dass die Polyvinlyacetale nicht länger ohne Phasenseparation mischbar sind, was bei Re-extrusion zu milchiger Eintrübung der so erzeugten Folie führt.

Ein weiterer Nachteil liegt in den besonders hohen Kosten der genannten, durch Co-extrusion erhaltenen, Mehrschichtfolien, wenn diese weitere Funktionen aufweisen sollen, welche ebenfalls durch spezielle Verfahrensvarianten in das Produkt eingebracht werden. Insbesondere die Kombination mit einem zusätzlich einextrudierten Farbband oder die Kombination mit einem keiligen Verlaufes des Dickenprofils der Folienbahn oder beides führt zu erheblich erhöhten Produktionskosten, welche in den Markt weitergegeben werden.

### Aufgabe

Aufgabe der vorliegenden Erfindung war es daher, ein Verfahren bereitzustellen, durch welches Verbundglaslaminate mit guten akustischen Eigenschaften erhalten werden können, ohne dabei auf eine Co-extrudierte Mehrschichtfolie oder auf eine weiche, schwer zu verarbeitende Dämpfungsschicht zurückgreifen zu müssen. Weitere Aufgabe war, kostengünstige Alternativen zur Herstellung von Verbundglaslaminaten mit kombinierten Eigenschaften (Farbkeil, mit keilförmigem Dickenprofil für head-up, Akustik) aufzuzeigen, bei welchen aktuell auf teure Spezial-PVB-folien zurückgegriffen werden muss.

Überraschenderweise wurde gefunden, dass Verbundglasscheiben mit guten akustischen Eigenschaften durch Verbinden von zwei Glasscheiben mit mindestens einer dickeren PVB-Folie mit einem üblichen Weichmachergehalt zwischen 24 - 36 Gew.-% sowie mindestens einer weiteren, dünneren Folie mit einem niedrigeren Weichmachergehalt erhalten werden können.

Die dünne Folie wird separat extrudiert und weist entweder gar keinen Weichmacher oder einen so geringen Weichmacheranteil auf, dass sie bei der Herstellung und Weiterverarbeitung unter mechanischer Beanspruchung sich weder zu stark dehnt noch zu klebrig ist.

### Darstellung der Erfindung

Gegenstand der Erfindung ist daher ein Verfahren zur Herstellung eines Verbundglases durch Laminieren mindestens einer Folie A mit einer Glasübergangstemperatur TA, enthaltend ein Polyvinylacetal PA und optional mindestens einen Weichmacher WA und mindestens einer Folie B mit einer Glasübergangstemperatur TB, enthaltend ein Polyvinylacetal PB und mindestens einen Weichmacher WB zwischen zwei Glasscheiben, wobei jeweils vor dem Laminieren
- Folie B einen Anteil von Weichmacher WB von 24.1 bis 36.0 Gew% und eine Glasübergangstemperatur TB von 10 bis 25 °C,
- Folie A einen Anteil von Weichmacher WA von 23.9 bis 0 Gew%, eine Glasübergangstemperatur TA von 15 bis 75 °C und eine um mindestens 5 °C höhere Glasübergangstemperatur als die aus Folie A hervorgehende Schicht A nach dem Laminieren und
- Folie A eine Dicke von nicht mehr als 30% der Dicke der Folie B aufweist.

Im Folgenden wird mit dem "Ausgangszustand" der Zustand der Folien A und B vor dem Laminieren, d.h. im noch getrennten Zustand der Folien verstanden.

Die Herstellung der Folien A und B erfolgt getrennt. Die Lamination der Folien A und B erfolgt durch Zusammenlegen (ggf Abrollen von getrennten Folienwickeln aus Folie A und B) zu einem Stapel. Die Herstellung des Laminats oder Folienstapels erfolgt nicht durch gemeinsame Herstellung der Folien z.B. in einer gemeinsamen Extrusion der Folien. Es ist natürlich möglich, einen Folienstapel aus zusammengelegten Folien A und B wieder zu einem gemeinsamen Folienwickel aufzurollen und diesen dann in Teilen abzurollen und zwischen zwei Glasscheiben zu positionieren.

Die Schichten A und B können sowohl im Ausgangszustand vor dem Laminieren der Schichten als auch in dem im Verbundglaslaminat befindlichen Zwischenschichtstapel einen einzigen Weichmacher als auch Gemische von Weichmachern sowohl unterschiedlicher und gleicher Zusammensetzung enthalten. Mit unterschiedlicher Zusammensetzung ist sowohl die Art der Weichmacher als auch deren Anteil im Gemisch gemeint. Bevorzugt weisen die Folie A und Folie B nach dem laminieren d.h. im fertig gestellten Verbundglas den gleichen Weichmacher WA und WB auf.

Erfindungsgemäß verwendete weichmacherhaltige Folien B enthalten im Ausgangszustand vor dem Laminieren der Schichten, bevorzugt 25.0 - 32.0 Gew.% und insbesondere 26.0 - 30.0 Gew.% Weichmacher.

Erfindungsgemäß verwendete weichmacherarme Folien A weisen im Ausgangszustand vor dem Laminieren der Schichten einen Weichmachergehalt von 23.9 bis 0 Gew.% auf, wobei die Ober und Untergrenze dieses Bereichs bevorzugt jeweils unabhängig voneinander 22 Gew.-%, 20 Gew.-%, 18 Gew.-%, 16 Gew.-%, 14 Gew.-%, 12 Gew.-%, 10 Gew.-%, 8 Gew.-% oder gar keinen Weichmacher (0.0 Gew.%) sein kann. Besonders bevorzugt enthalten die weichmacherarmen Folien A 5.0 - 21.0 Gew.-% Weichmacher.

Die Lage des Verteilungsgleichgewichtes ist nicht nur materialsondern auch massenabhängig. Daher weist im erfindungsgemäßen Verfahren die Folie A im Ausgangszustand vor dem Laminieren der Schichten eine Dicke von nicht mehr als 30%, bevorzugt 25% und bevorzugt nicht mehr als 20% der Dicke der Folie bzw. der Folien B auf. Die Untergrenze der Dicke der Folie A sollte mindestens 1 % der Dicke der Folie bzw. der Folien B betragen. Besonders bevorzugt beträgt die der Dicke der Folie A 5% oder 10% bzw 15% der Dicke der Folie bzw. der Folien B.

Die Dicke einer Folie A im Ausgangszustand vor dem Laminieren der Schichten beträgt 20 - 200 µm, bevorzugt 30 - 150 µm, bevorzugt 40 - 120 µm, bevorzugt 60 - 100 µm und am meisten bevorzugt 70 - 90 µm. Im Verbundglas nimmt die Dicke der Folie durch Übergang von Weichmacher aus Folie B zu.

Die Dicke einer Folie B beträgt im Ausgangszustand 450 - 1500 µm, bevorzugt 600 - 1000 µm, bevorzugt 700 - 900 µm. Bei Verwendung mehrerer Folien B gilt entsprechendes für deren Gesamtdicke. Werden Folien B vor Herstellung des Sandwiches gereckt und / oder zusätzlich der Form einer Scheibe (z.B. Windschutzscheibe) bogenförmig angepasst, können sich die angegebenen Dicken zum Zeitpunkt der Lamination noch einmal um bis zu 20% verringern.

Mindestens eine dünne, weichmacherarme Folie A ist hierbei zu einer Glasoberfläche orientiert.

In einer weiteren Ausführungsform der Erfindung kann die dünne weichmacherarme Folie A auch zwischen zwei oder mehr dickeren Folien mit einem höheren Weichmachergehalt positioniert werden. In beiden Fällen kann mindestens eine der Folien mit höherem Weichmachergehalt dabei zusätzliche Merkmale wie etwa Bandfilter, keilförmiges Dickenprofil, IR-absorbierende Eigenschaften, Akustikeigenschaften, Farbigkeit etc. aufweisen.

Bei Automobilverglasung ist es aus ästhetischen und Dauerhaftigkeitsgründen nicht bevorzugt, die Kanten der Verbundglaslaminate mit Dichtstoffen zu versiegeln. Dies begünstigt die Anfälligkeit solcher Verglasungen gegenüber Ausbildung von Kantendefekten wie etwa Ablösungen der Schichten untereinander (Delaminationen) oder Auftreten von Blasen wegen einer bis zur Kante des Laminates reichenden, sehr weichen Dämpfungsschicht.

Im erfindungsgemäßen Verfahren kann die weichmacherarme Folie A so zugeschnitten und positioniert werden kann, dass sie im Verbundglaslaminat nicht ganz bis zum Rand reicht. Insbesondere kann die Folie A im Randbereich um mindestens 1 mm kleiner sein als mindestens eine Glasscheibe sodass die Folie B in diesem Randbereich in direktem Kontakt mit mindestens einer Glasscheibe ist.

Weiterhin kann die dünne, im Ausgangszustand weichmacherarme oder weichmacherfreie Folie A vor dem Einlegen in den Glas / Foliensandwich perforiert werden, so dass sie Ausparungen wie Durchbrüche, Löcher, Schlitze in beliebigen geometrischen Mustern aufweisen kann.

So kann die Folie A mindestens eine Aussparung aufweisen, sodass die Folie B durch diese Aussparung in direktem Kontakt mit mindestens einer Glasscheibe ist. Nach dem Verkleben zum fertigen Verbundglas ist die Folie B mit im Ausgangszustand höherem Weichmachergehalt an diesen Stellen mit den Glasscheiben ohne Unterbrechung verklebt, bzw. bei Positionierung einer dünneren Folie zwischen zwei dickeren Folien ein direkter Kontakt zwischen letzteren hergestellt. Hierdurch kann das Schwingungsverhalten gezielt beeinflusst werden, so dass an der Verbundglasscheibe Schwingungseigenschaften zugänglich werden, welche sich mit durchgehend in Bauteilebene befindlichen und übereinanderliegenden Dämpfungsschichten nicht erhalten lassen. Ein weiterer Vorteil des Verfahrens liegt darin, dass durch die Abgabe von Weichmacher aus der dickeren, im Ausgangszustand weichmacherhaltigeren Folie B an die dünne im Ausgangszustand weichmacherarme Folie A erstere im Verbundglaslaminat gewissermaßen "nachhärtet". D.h. bei Herstellung, Abwickeln, Auflegen, Entlüften und Herstellung des Randverbundes im jeweiligen Vorverbundverfahren weist die Folie B die üblichen Eigenschaften auf und weist keine für die Verarbeitung ungünstig hohe Härte auf. Mit Erreichen des Endzustands hat sich aufgrund des in der Schicht abgesenkten Weichmachgehaltes die Glasübergangstemperatur der Folie B bei Gebrauchstemperatur erhöht, was in Verbindung mit der gleichzeitig resultierenden weichen Schicht A zu sehr guter Penetrationsfestigkeit und guten akustischen Eigenschaften führt.

Das Verfahren umfasst die Kombination einer beliebigen Anzahl von Schichten wie z.B. 2, 3, 4, 5, 6, 7, 8 oder 9 Schichten.

Unabhängig von der Anzahl der Schichten und deren Zusammensetzung, erfolgt im Zuge des Verfahrens nach Kombination der Schichten zu einem Folienlaminat die Migration von Weichmacher aus weichmacherreicheren Schichten in ursprünglich weichmacherärmere Schichten. Durch die Migration des Weichmachers wird im Verbundglas eine Zwischenschichtabfolge mit Schichten unterschiedlicher mechanischer und/oder akustischer Eigenschaften erhalten.

Im Kontakt mit der dickeren PVB-Folie mit höherem Weichmachergehalt setzt eine Migration von Weichmacher aus der relativ dicken weichmacherreichen PVB-Folie in die dünne PVB-Folie während des Laminiervorganges, z. B. beim Verbinden in einem Autoklaven, ein, wodurch im Endzustand des fertiggestellten Verbundglases die Glasübergangstemperatur (T_{g}) der aus der dünnen PVB-Folie hervorgegangenen Schicht unter 10°C sowie deren akustisches Dämpfungsmaximum unter 35°C zu liegen kommen. Der Endzustand (d.h. in einem thermodynamischen Gleichgewichtszustand bei Gebrauchstemperatur von 20°C) des Weichmachergehalts, der Glasübergangstemperatur und des Dämpfungsmaximums hängt dabei im Wesentlichen vom chemischen Aufbau der in den unterschiedlichen Schichten befindlichen Polyvinylacetale, der insgesamt zur Verfügung stehenden Weichmachermenge, sowie der Art des Weichmachers ab. Der molekulare Aufbau der Polyvinylacetale bestimmt deren Polarität und Affinität zu den unterschiedlichen Weichmachern.

Der Migrationsprozess des Weichmachers kann auch während des bei der Verbundglasherstellung üblichen Autoklavenprozess initiiert werden. Hier wird ein Schichtkörper aus zwei Glassscheiben mit zwischengelegtem Folienlaminat einer Temperatur von 100 - 150° C für 1 bis 6 Stunden ausgesetzt.

Die endgültigen Eigenschaften stellen sich mit dem Erreichen des thermodynamischen Gleichgewichtszustandes ein. Bei einer üblichen Gebrauchstemperatur von 20°C, kann die Einstellung des Gleichgewichtszustandes von bis zu 8 Wochen in Anspruch nehmen. Diese Zeit kann verkürzt werden, wenn zusätzlich zu einem Autoklavenprozess eine Lagerung in der Wärme bei nicht mehr als 40°C durchgeführt wird. Erfolgt eine Lagerung bei zu hoher Temperatur, zeigen Weichmacher die Tendenz, sich eher unabhängig von den Polaritäten der in den verschiedenen Schichten vorliegenden Polyvinylacetalen zu verteilen, was der Verteilung im Gleichgewichtszustandes bei 20°C nicht entsprechen muss.

Die Verarbeitungsnachteile von sehr weichen Einzelfolien werden vermieden, da sich die veränderten Eigenschaften erst durch Migration von Weichmacher im bereits fixierten Zwischenschichtstapel im Verbundglas einstellen.

Die erfindungsgemäß eingesetzten Schichten enthalten Polyvinylacetale, welche durch Acetalisierung von Polyvinylalkohol oder Ethylen-Vinylalkohol-Copolymer hergestellt werden.

Die Schichten können Polyvinylacetale mit jeweils unterschiedlichem Polyvinylalkoholgehalt, Acetalisierungsgrad, Restacetatgehalt, Ethylenanteil, Molekulargewicht bzw. unterschiedlichen Kettenlängen des Aldehydes der Acetalgruppen enthalten.

Insbesondere können die zur Herstellung der Polyvinylacetale eingesetzten Aldehyde oder Ketoverbindungen linear oder verzweigt (d.h. vom "n" oder "iso"-Typs) mit 2 bis 10 Kohlenstoffatomen sein, was zu entsprechenden linearen oder verzweigten Acetalgruppen führt. Die Polyvinylacetale werden entsprechend als "Polyvinyl(iso)acetale" oder "Polyvinyl(n)-acetale" bezeichnet.

Das erfindungsgemäß verwendete Polyvinyl(n)acetal resultiert insbesondere aus der Umsetzung von mindestens einem Polvinylalkohol mit einer oder mehreren aliphatischen unverzweigten Ketoverbindung mit 2 bis 10 Kohlenstoffatomen. Bevorzugt wird hierzu n-Butyraldehyd verwendet.

Die zur Herstellung der Polyvinylacetale in verschiedenen Schichten verwendeten Polyvinylalkohole oder Ethylen-Vinylalkohol-Copolymere können jeweils gleich oder unterschiedlich, rein oder eine Mischung von Polyvinylalkoholen oder Ethylen-Vinylalkohol-Copolymere mit unterschiedlichem Polymerisationsgrad oder Hydrolysegrad sein.

Der Polyvinylacetatgehalt der Polyvinylacetale in verschiedenen Schichten kann durch Verwendung eines zu einem entsprechenden Grad verseiften Polyvinylalkohols oder Ethylen-Vinylalkohol-Copolymer eingestellt werden. Durch den Polyvinylacetatgehalt wird die Polarität des Polyvinylacetals beeinflusst, wodurch sich auch die Weichmacherverträglichkeit und die mechanische Festigkeit der jeweiligen Schicht ändern. Es ist auch möglich, die Acetalisierung der Polyvinylalkohole oder Ethylen-Vinylalkohol-Copolymere mit einem Gemisch aus mehreren Aldehyden oder Ketoverbindungen durchzuführen.

Bevorzugt enthalten die Schichten Polyvinylacetale mit einem Anteil an Polyvinylacetatgruppen bezogen auf die Schichten jeweils gleich oder unterschiedlich 0.1 bis 20 Mol%, bevorzugt 0,5 bis 3 Mol% oder 5 bis 8 Mol%.

Der Polyvinylalkoholgehalt der verwendeten Polyvinylacetale PA der im Ausgangszustand weichmacherärmeren Folie A kann zwischen 6 - 16 Gew.-%, 8 - 15 Gew.-%, 10 - 14 Gew.-% und bevorzugt zwischen 11 und 13 Gew.-% betragen. Der Polyvinylalkoholgehalt der verwendeten Polyvinylacetale PB der im Ausgangszustand weichmacherreicheren Folie B kann zwischen 14 - 26 Gew.-%, 16 - 24 Gew.-%, 18 - 22 Gew.-% und bevorzugt zwischen 19 und 21 Gew.-% betragen.

Die Glasübergangstemperatur TA (Messung von Tg nach DIN 53765) der Folien A liegt im Ausgangszustand in einem Bereich von 15 - 75°C, bevorzugt 17 - 60 °C, bevorzugt 19 - 45°C, bevorzugt 20 - 40°C, bevorzugt 21 - 35°C, bevorzugt 22 - 30 °C.

Im fertig gestellten Verbundglas d.h. nach dem Laminieren und nach Einstellen des thermodynamischen Gleichgewichts ist die Glasübergangstemperatur der aus Folie A hervorgegangenen Schicht nach Erreichen des Gleichgewichtszustandes (TA') gegenüber der TA der Ausgangsfolie durch die Aufnahme von Weichmacher um mindestens 5°C, bevorzugt um mindestens 10 °C, besonders bevorzugt um mindestens 15°C und insbesondere um mindestens 20°C reduziert.

Die Glasübergangstemperatur TB (Messung nach DIN 53765) mindestens einer Folie B liegt im Ausgangszustand in einem Bereich von 10 - 25°C, bevorzugt 14 - 23 °C, bevorzugt 15 - 21°C, bevorzugt 16 - 20°C.

Folien A und B werden bevorzugt so kombiniert, dass im Ausgangszustand TA größer TB ist, wogegen im fertig gestellten Verbundglas d.h. nach dem Laminieren und nach Einstellen des thermodynamischen Gleichgewichts die Glasübergangstemperatur der aus Folie A hervorgegangenen Schicht (TA') kleiner als die Glasübergangstemperatur der aus Folie B hervorgegangenen Schicht (TB') ist.

Bevorzugt beträgt die Summe aus (TA - TB) + (TB' - TA') mehr als 10°C, 15°C, 20°C, 30°C.

Die Schichten enthalten bevorzugt unvernetztes Polyvinylacetal. Der Einsatz von vernetzten Polyvinylacetalen ist ebenso möglich. Verfahren zur Vernetzung von Polyvinylacetalen sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben.

Die erfindungsgemäß eingesetzten Folien A und/oder B können als Weichmacher eine oder mehrere Verbindungen ausgewählt aus der folgenden Gruppen enthalten :
- Ester von mehrwertigen aliphatischen oder aromatischen Säuren, z.B. Dialkyladipate wie Dihexyladipat, Dioctyladipat, Hexylcyclohexyladipat, Mischungen aus Heptyl- und Nonyladipaten, Diisononyladipat, Heptylnonyladipat sowie Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure wie Butylbenzylphthalat oder Bis-2-butoxyethylphthalat
- Ester oder Ether von mehrwertigen aliphatischen oder aromatischen Alkoholen oder Oligoetherglykolen mit einem oder mehreren unverzweigen oder verzweigten aliphatischen oder aromatischen Substituenten, wie z.B. Estern von Di-, Tri- oder Tetraglykolen mit linearen oder verzweigten aliphatischen oder cycloaliphatischen Carbonsäuren; Als Beispiele für letztere Gruppe können Diethylenglykol-bis-(2-ethylhexanoat), Triethylenglykol-bis-(2-ethylhexanoat), Triethylenglykol-bis-(2-ethylbutanoat), Tetraethylenglykol-bis-n-heptanoat, Triethylenglykol-bis-n-heptanoat, Triethylenglykol-bis-n-hexanoat, Tetraethylenglykoldimethylether und/oder Dipropylenglykolbenzoat dienen
- Phosphate mit aliphatischen oder aromatischen Esteralkoholen wie z.B. Tris(2-ethylhexyl)phosphat (TOF), Triethylphosphat, Diphenyl-2-ethylhexylphosphat, und/oder Trikresylphosphat
- Ester der Zitronensäure, Bernsteinsäure und/oder Fumarsäure

Besonders bevorzugt enthalten die Folien A und B 1,2-Cyclohexandicarbonsäurediisononylester (DINCH) oder Triethylenglykol-bis-2-ethylhexanoat (3GO bzw. 3G8) als Weichmacher.

Das erfindungsgemäße Verfahren nutzt die diffusionsgetriebene Verschiebung von Weichmachern zwischen den mindestens zwei im Kontakt zueinander befindlichen Folien A und B, wodurch sich im Endzustand des thermodynamischen Gleichgewichtes andere Weichmachergehalte einstellen, als im Zustand vor Kontaktherstellung.

Zusätzlich können die Folien A und B weitere Zusätze enthalten wie Restmengen an Wasser, UV-Absorber, Antioxidantien, Haftungsregulatoren, optische Aufheller, Stabilisatoren, Farbmittel, Verarbeitungshilfsmittel, organische oder anorganische Nanopartikel, pyrogene Kieselsäure und/oder oberflächenaktive Stoffe. Insbesondere kann Folie A auch Fluoreszierende Zusätze enthalten oder mit einer IR-Absorbierenden oder -Reflektierenden Beschichtung versehen sein. Als Haftungsregulatoren kann die Folie A 0,001 bis 0,1 Gew.% Alkali- und/oder Erdalkalisalze von Carboxylsäuren aufweisen.

Der Laminationsschritt innerhalb des erfindungsgemäßen Verfahren zur Herstellung eines Verbundglases wird bevorzugt so durchgeführt, dass die Folien A und B zwischen die beiden Glasscheiben positioniert werden und der so vorbereitete Schichtkörper unter erhöhtem oder vermindertem Druck und erhöhter Temperatur zu einem Laminat verpresst wird.

Es ist auch möglich, die Folie A mit mindestens einer Folie B in Kontakt zu bringen wie z.B. zu einem gemeisamen Folienwickel aufzurollen oder als zugeschnittenes Halbzeug und der so erhaltene Folienstapel zwischen zwei Glasscheiben zu positionieren. Anschließend wird der so vorbereitete Schichtkörper unter erhöhtem oder vermindertem Druck und erhöhter Temperatur zu einem Laminat verpresst.

Zur Laminierung des Schichtkörpers können die dem Fachmann geläufigen Verfahren mit und ohne vorhergehender Herstellung eines Vorverbundes eingesetzt werden.

Sogenannte Autoklavenprozesse werden bei einem erhöhten Druck von ca. 10 bis 15 bar und Temperaturen von 130 bis 145 °C über ca. 2 Stunden durchgeführt. Vakuumsack- oder Vakuumringverfahren z.B. gemäß EP 1 235 683 B1 arbeiten bei ca. 200 mbar und 130 bis 145 °C

Es sind auch sog. Vakuumlaminatoren einsetzbar. Diese bestehen aus einer beheizbaren und evakuierbaren Kammer, in denen Verbundverglasungen innerhalb von 30 - 60 Minuten laminiert werden können. Verminderte Drücke von 0,01 bis 300 mbar und Temperaturen von 100 bis 200 °C, insbesondere 130 - 160 °C haben sich in der Praxis bewährt.

Im einfachsten Fall wird zur Herstellung der Verbundglaslaminate Folie A oder B auf eine Glasscheibe positioniert und hierzu synchron oder darauffolgend die weitere Folie B bzw. A. Im Anschluss daran wird die zweite Glasscheibe aufgelegt und ein Glasfolienverbund erzeugt. Überschüssige Luft kann danach mithilfe eines beliebigen dem Fachmann bekannten Vorverbundverfahrens entfernt werden. Hierbei erfolgt auch bereits ein erstes leichtes Verkleben der Schichten untereinander sowie mit dem Glas.

Der Glasfolienverbund kann abschließend einem Autoklavenprozess unterworfen werden. Bevorzugt wird Folie A aus der ersten Glasscheibe positioniert und mit der dickeren Folie B bedeckt, bevor die zweite Glasscheibe aufgelegt wird. Das Verfahren kann in vielen denkbaren und grundsätzlich praktikablen Varianten durchgeführt werden. Beispielsweise wird Folie A einfach von einer Rolle entsprechender Breite entnommen wogegen Folie B vorher auf Maß des herzustellenden Verbundglases zugeschnitten wurde. Dies ist insbesondere im Fall von Windschutzscheiben und anderen Automobilverglasungsteilen von Vorteil. In diesem Fall ist es besonders vorteilhaft, die dickere Folie B vor Zuschnitt zusätzlich noch zu Recken. Dies ermöglicht einen sparsameren Folieneinsatz bzw. für den Fall, dass Folie B ein Farbkeil aufweist, das Anpassen von dessen Krümmung an den oberen Scheibenrand. Anders als im Fall von Co-extrudieren Mehrschichtschalldämmfolien entstehen hier keine Probleme durch ungleichmäßige Verjüngung einer bereits in der Folie sehr weichen Dämpfungsschicht.

Im Automobilbereich, insbesondere zur Herstellung von Windschutzscheiben werden häufig Folien verwendet, die im oberen Bereich ein sog. Farbband aufweisen. Hierzu kann entweder der obere Teil der Folien A und B mit einer entsprechend eingefärbten Polymerschmelze coextrudiert werden oder es kann in einem Mehrschichtsystem eine der Folien A und B eine unterschiedliche Färbung aufweisen. In der vorliegenden Erfindung ist dies durch vollständiges oder teilweises Einfärben zumindest einer der Folien A und B realisierbar.

Im erfindungsgemäßen Verfahren können die Folien B daher einen Farbkeil aufweisen, welcher insbesondere bereits in einem vorgelagerten Prozessschritt der Geometrie einer Windsschutzscheibe angepasst wurde.

Im einfachsten Fall ist die Folie B eine handelsüblichen PVB-Folie mit oder ohne Farbband und mit oder ohne keiligem Dickenprofil. Ebenfalls können Folien B mit darin zum IR-Schutz dispergierten Nanopartikeln als auch gefärbte Folien verwendet werden. Natürlich kann eine Folie B auch eine Folie mit Akustikfunktion sein, so dass durch Kombination mit einer Folie A nochmals verbesserter Schalldämmeigenschaften erhalten werden. Natürlich kann eine Folie B bereits auch mehrere der genannten Funktionen in sich vereinen.

Die Herstellung der dünnen Folien A erfolgt in der Regel durch Extrusion unter Verwendung einer Cast-Film Linie oder als Blasfolie. Hierbei kann eine Oberflächenrauhigkeit durch kontrollierten Fließbruch oder beim Cast-Film Verfahren zusätzlich durch Verwendung einer strukturierten Chillroll erfolgen.

Zusätzlich kann einer bereits hergestellten Folie durch einen Prägevorgang zwischen mindestens einem Walzenpaar eine regelmäßige, nicht stochastische Rauhigkeit aufgeprägt werden. Bevorzugt weisen erfindungsgemäß verwendete Folien eine beidseitige oder bevorzugt einseitige Oberflächenstruktur mit einer Rauhigkeit Rz von 1 bis 25 µm, bevorzugt Rz von 1 bis 20 µm, besonders bevorzugt Rz von 3 bis 15 µm und insbesondere Rz von 4 bis 12 µm auf. Besonders bevorzugt ist, wenn die mit der Glasscheibe in Kontakt kommende Seite der Folie A eine Oberflächenrauhigkeit Rz von nicht mehr als 20% ihrer Dicke aufweist.

### Meßmethoden

Die Bestimmung der Glasübergangstemperatur (Tg) der Folien bzw. Schichten erfolgt mittels Dynamischer Differenzkalorimetrie (DSC) gemäß DIN 53765 unter Verwendung einer Heizrate von 10K/min im Temperaturintervall -50 °C - 150°C. Es wird eine erste Heizrampe, gefolgt von einer Kühlrampe, gefolgt von einer zweiten Heizrampe gefahren. Die Lage der Glasübergangstemperatur wird an der der zweiten Heizrampe zugehörigen Messkurve nach DIN 51007 ermittelt. Der DIN-Mittelpunkt (Tg DIN) ist definiert als Schnittpunkt einer Horizontalen auf halber Stufenhöhe mit der Messkurve. Die Stufenhöhe ist durch den vertikalen Abstand der beiden Schnittpunkte der Mitteltangente mit den Basislinien der Messkurve vor und nach Glasumwandlung definiert.

### Beispiele

Die Folien der Beispiele 1 - 8 wurden auf einem Kleinextruder mit Kühlwalzeneinheit in Breite 35 cm in den angegebenen Dicken mit den angegebenen Mengen und Typen an Weichmacher hergestellt. Das verwendete Polyvinylbutyral wies für diese Beispiele einen PVOH-Gehalt von 12,0 Gew.-% und einen Restacetat von 8 Gew.-% auf. An den Folien wurden die in Tabelle I angegebenen Glasübergangstemperaturen (TA) gemessen.

TROSIFOL VG R10 0.76 ist eine handelsübliche Standardautomobilfolie zur Lamination von Windschutzscheiben in einer Dicke von 760 µm, mit einem Weichmachergehalt von 27,5 Gew.-%. Die zur Produktion verwendete PVB-Charge wies einen PVOH-Gehalt von 20,3 Gew.-% auf. Die Glasübergangstemperatur (TB) wurde zu 19,2 °C gemessen.

Vor Verlegung wurden aller Folien 24h in einem Klima von 23°C/23% rF gelagert.

Zur Herstellung der Testlaminate wurden plane Gläser vom Typ Planilux® in 2.1 mm Dicke und mit 30 x 30 cm Kantenlänge mit einer industrieüblichen Glaswaschmaschine gewaschen.

Die unteren Scheiben wurde auf einem Verlegetisch plaziert und die Folien A der Beispiele 1 - 8 jeweils von einer Rolle abwickelnd darüber positioniert. Als nächstes wurde eine Lage der Folie VG R10 darüber gelegt, bevor der Sandwich durch Auflegen der oberen Planilux-Scheibe komplettiert wurde. Überstehende Folie wurde mit einem scharfen Messer kantenbündig abgetrennt. Die Sandwichs wurden durch eine industrieübliche Walzenvorverbundanlage vorverbunden und abschließend während 90 Minuten in einem Autoklaven bei maximal 140 °C und 12 bar Druck zum Endverbund verklebt.

Nach Entnahme der Gläser wurden diese bei 20°C im Labor gelagert und an daraus entnommenen Laminatstreifen in der Abmessung 2,5 x 30 cm wöchentlich das Schwingungsverhalten gemäß ISO 16940:2008 gemessen. Nach 6 Wochen Lagerzeit änderten sich die Verlustfaktoren für 1ste und 2te Schwingungsmode nicht mehr, so dass die Testlaminate mit den darin befindlichen Zwischenschichtkombinationen als im Gleichgewicht befindlich betrachtet werden konnten. Die Werte für Verlustfaktor sowie die dazugehörigen Resonanzfrequenzen sind in Tabelle I aufgeführt. Bei Verlustfaktoren ab 0,20 kann von einer gut wahrnehmbaren akustischen Bedämpfung der Schwingungen eines Glasbauteils ausgegangen werden. Bei Verlustfaktoren oberhalb 0,25 von einer deutlich wahrnehmbaren Verbesserung der Schall- und Schwingungsdämmung.

Durch Kombination der dünnen weichmacherarmen Folien der Beispiele 1 - 8 mit der handelsüblichen Standardfolie TROSIFOL VG R10 konnten somit auf einfache Weise Testlaminate mit guten sicherheitseigenschaften und guten akustischen Eigenschaften hergestellt werden.

Tabelle 2 zeigt Schwingungseigenschaften gemäß ISO 16940:2008, gemessen an Laminatsteifen 2,5 x 30 cm nach 10 Wochen Lagerung bei 20°C sowie TA' bzw. TB'.

**Tabelle 1**

| | Bsp 1 | Bsp 2 | Bsp 3 | Bsp 4 | Bsp 5 | Bsp 6 | Bsp 7 | Bsp 8 | Bsp 1 - 8 |
|---|---|---|---|---|---|---|---|---|---|
| Folie | A | A | A | A | A | A | A | A | B |
| Polyvinylbutyral Gew% | 92,5 | 85 | 92,5 | 85 | 77,5 | 92,5 | 85 | 77,5 | 72,5 |
| PVOH (Gew.-%, bezogen auf PVB) | 12,0 | 12,0 | 12,0 | 12,0 | 12,0 | 12,0 | 12,0 | 12,0 | 20,3 |
| Weichmacher 3G8 Gew% | 7, 5 | 15 | | | | | | | 25 |
| HEXAMOLL® DINCH Gew% | | | 7, 5 | 15 | 22,5 | | | | |
| PLASTOMOLL® DNA Gew% | | | | | | 7, 5 | 15 | 22,5 | |
| Weichmacher DBEA Gew% | | | | | | | | | 2, 5 |
| Dicke der Folie (µm) | 90 | 100 | 90 | 100 | 110 | 85 | 110 | 110 | 760 |
| Tg im Ausgangszustand (°C) | 44,4 | 26,7 | 46,3 | 33,6 | 21, 6 | 43,5 | 28,4 | 15,3 | 19,2 |

**Tabelle 2**

| | Bsp 1 | Bsp 2 | Bsp 3 | Bsp 4 | Bsp 5 | Bsp 6 | Bsp 7 | Bsp 8 | Bsp 1 - 8 |
|---|---|---|---|---|---|---|---|---|---|
| Schicht | A | A | A | A | A | A | A | A | B |
| Tg der Schicht A (TA') 10 Wochen nach Laminieren | 10,2 | 7,2 | 10,8 | 6,5 | 4,0 | 11,0 | 5,4 | 3, 5 | - |
| Tg der Schicht B (TB') 10 Wochen nach Laminieren | 24,7 | 20,8 | 22,6 | 21,4 | 20,3 | 23,2 | 21,0 | 19,7 | - |
| Verlustfaktor f1 bei 20 °C | 0,228 | 0,268 | 0,238 | 0,278 | 0,312 | 0,22 | 0,258 | 0,306 | - |
| Verlustfaktor f2 bei 20°C | 0,332 | 0,358 | 0,334 | 0,368 | 0,388 | 0,33 | 0,36 | 0,382 | - |
| Resonanzfrequenz f1 bei 20 °C | 179 | 174 | 179 | 173 | 163 | 181 | 174 | 164 | - |
| Resonanzfrequenz f2 bei 20 °C | 925 | 880 | 914 | 877 | 803 | 919 | 880 | 815 | - |

## Patentansprüche

1. Verfahren zur Herstellung eines Verbundglases durch Laminieren mindestens einer Folie A mit einer Glasübergangstemperatur TA, enthaltend ein Polyvinylacetal PA und optional mindestens einen Weichmacher WA und mindestens einer Folie B mit einer Glasübergangstemperatur TB, enthaltend ein Polyvinylacetal PB und mindestens einen Weichmacher WB zwischen zwei Glasscheiben, **dadurch gekennzeichnet, dass** jeweils vor dem Laminieren
- Folie B einen Anteil von Weichmacher WB von 24.1 bis 36.0 Gew% und eine Glasübergangstemperatur TB von 10 bis 25 °C,
- Folie A einen Anteil von Weichmacher WA von 23.9 bis 0 Gew%, eine Glasübergangstemperatur TA von 15 bis 75 °C und eine um mindestens 5 °C höhere Glasübergangstemperatur als die aus Folie A hervorgehende Schicht A nach dem Laminieren und
- Folie A eine Dicke von nicht mehr als 30% der Dicke der Folie B aufweist.

2. Verfahren nach Anspruch 1 **dadurch gekennzeichnet, dass** die Folie A ein Polyvinylacetal PA mit einem Anteil an Vinylalkoholgruppen von 6 bis 16 Gew.% und die Folie B ein Polyvinylacetal PB mit einem Anteil an Vinylalkoholgruppen von 14 bis 26 Gew.% aufweist.

3. Verfahren nach einem der Ansprüche 1 bis 2 **dadurch gekennzeichnet, dass** eine Folie B zwischen zwei Folien A angeordnet ist und beide Folien A in direktem Kontakt zu jeweils einer Glasscheibe sind.

4. Verfahren nach einem der Ansprüche 1 bis 3 **dadurch gekennzeichnet, dass** die Folie A 0,001 bis 0,1 Gew.% Alkali- und/oder Erdalkalisalze von Carboxylsäuren aufweist.

5. Verfahren nach einem der Ansprüche 1 bis 4 **dadurch gekennzeichnet, dass** die Folie A im Randbereich um mindestens 1 mm kleiner ist als mindestens eine Glasscheibe sodass die Folie B in diesem Randbereich in direktem Kontakt mit mindestens einer Glasscheibe ist.

6. Verfahren nach einem der Ansprüche 1 bis 5 **dadurch gekennzeichnet, dass** die Folie A mindestens eine Aussparung aufweist, sodass die Folie B durch diese Aussparung in direktem Kontakt mit mindestens einer Glasscheibe ist.

7. Verfahren nach einem der Ansprüche 1 bis 6 **dadurch gekennzeichnet, dass** Folie A und Folie B nach dem Laminieren den gleichen Weichmacher WA und WB aufweisen.

8. Verfahren nach einem der Ansprüche 1 bis 7 **dadurch gekennzeichnet, dass** die Folie A auf einer Glasscheibe positioniert, anschließend mit mindestens einer Folie B abgedeckt wird, auf die eine zweite Glasscheibe gelegt wird.

9. Verfahren nach einem der Ansprüche 1 bis 8 **dadurch gekennzeichnet, dass** die Folie A mit mindestens einer Folie B in Kontakt gebracht und der so erhaltene Folienstapel zwischen zwei Glasscheibe positioniert wird.

10. Verfahren nach einem der Ansprüche 1 bis 9 **dadurch gekennzeichnet, dass** die mit der Glasscheibe in Kontakt kommende Seite der Folie A eine Oberflächenrauhigkeit Rz von nicht mehr als 20% ihrer Dicke aufweist.

11. Verfahren nach einem der Ansprüche 1 bis 10 **dadurch gekennzeichnet, dass** die Folie B eine keilförmige Dickenverteilung aufweist.

12. Verfahren nach einem der Ansprüche 1 bis 11 **dadurch gekennzeichnet, dass** die Folie B einen Farbkeil aufweist.

## Claims

1. A method for producing a laminated glass by laminating at least one film A, having a glass transition temperature TA and containing a polyvinyl acetal PA and optionally at least one plasticiser WA, and at least one film B, having a glass transition temperature TB and containing a polyvinyl acetal PB and at least one plasticiser WB, between two glass sheets, **characterised in that**, before the lamination process,
- film B has a proportion of plasticiser WB from 24.1 to 36.0 % by weight and a glass transition temperature TB from 10 to 25 °C,
- film A has a proportion of plasticiser WA from 23.9 to 0 % by weight, a glass transition temperature TA from 15 to 75 °C, and a glass transition temperature that is at least 5 °C higher than the layer A developed from film A after the lamination, and
- film A has a thickness of no more than 30 % of the thickness of film B.

2. The method according to claim 1, **characterised in that** film A comprises a polyvinyl acetal PA having a proportion of vinyl alcohol groups from 6 to 16 % by weight and film B comprises a polyvinyl acetal PB having a proportion of vinyl alcohol groups from 14 to 26 % by weight.

3. The method according to either one of claims 1 and 2, **characterised in that** a film B is arranged between two films A and both films A are in direct contact with a glass sheet.

4. The method according to one of claims 1 to 3, **characterised in that** film A comprises 0.001 to 0.1 % by weight of alkaline salts and/or alkaline earth salts of carboxylic acids.

5. The method according to one of claims 1 to 4, **characterised in that** film A in the edge region is at least 1 mm smaller than at least one glass sheet, with the result that film B in this edge region is in direct contact with at least one glass sheet.

6. The method according to one of claims 1 to 5, **characterised in that** film A has at least one recess, with the result that film B is in direct contact with at least one glass sheet through this recess.

7. The method according to one of claims 1 to 6, **characterised in that** film A and film B comprise the same plasticiser WA and WB after lamination.

8. The method according to one of claims 1 to 7, **characterised in that** film A is positioned on a glass sheet, is then covered with at least one film B, onto which a second glass sheet is laid.

9. The method according to one of claims 1 to 8, **characterised in that** film A is brought into contact with at least one film B and the film stack thus obtained is positioned between two glass sheets.

10. The method according to one of claims 1 to 9, **characterised in that** the side of film A coming into contact with the glass sheet has a surface roughness Rz of no more than 20 % of its thickness.

11. The method according to one of claims 1 to 10, **characterised in that** film B has a wedge-shaped thickness distribution.

12. The method according to one of claims 1 to 11, **characterised in that** film B has a colour tint.

## Revendications

1. Procédé de fabrication d'un verre feuilleté par laminage, entre deux vitres, d'au moins une feuille A ayant une température de transition vitreuse TA, laquelle contient un acétal de polyvinyle PA et optionnellement au moins un plastifiant WA, et d'au moins une feuille B ayant une température de transition vitreuse TB, laquelle contient un acétal de polyvinyle PB et au moins un plastifiant WB, **caractérisé en ce que**, préalablement au laminage,
- la feuille B présente une proportion de plastifiant WB comprise entre 24,1 et 36,0 % en poids et une température de transition vitreuse TB comprise entre 10 et 25 °C,
- la feuille A présente une proportion de plastifiant WA comprise entre 23, 9 et 0 % en poids, une température de transition vitreuse TA comprise entre 15 et 75 °C, et une température de transition vitreuse supérieure d'au moins 5 °C par rapport à la couche A résultant de la feuille A suite au laminage, et
- la feuille A présente une épaisseur représentant au maximum 30 % de l'épaisseur de la feuille B.

2. Procédé selon la revendication 1, **caractérisé en ce que** la feuille A comporte un acétal de polyvinyle PA ayant une proportion de groupes d'alcool vinylique comprise entre 6 et 16 % et la feuille B comporte un acétal de polyvinyle PB ayant une proportion de groupes d'alcool vinylique comprise entre 14 et 26 % en poids.

3. Procédé selon l'une des revendications 1 à 2, **caractérisé en ce qu'**une feuille B est disposée entre deux feuilles A, les deux feuilles A étant chacune en contact direct avec une vitre.

4. Procédé selon l'une des revendications 1 à 3, **caractérisé en ce que** la feuille A comporte 0,001 à 0,1 % en poids de sels alcalins et/ou alcalino-terreux d'acides carboxyliques.

5. Procédé selon l'une des revendications 1 à 4, **caractérisé en ce que**, dans la zone marginale, la feuille A est au moins 1 mm plus petite qu'au moins une vitre faisant en sorte que, dans ladite zone marginale, la feuille B soit en contact direct avec au moins une vitre.

6. Procédé selon l'une des revendications 1 à 5, **caractérisé en ce que** la feuille A présente au moins un évidement, de manière à ce qu'à travers ledit évidement, la feuille B soit en contact direct avec au moins une vitre.

7. Procédé selon l'une des revendications 1 à 6, **caractérisé en ce que** la feuille A et la feuille B comportent, suite au laminage, le même plastifiant WA et WB.

8. Procédé selon l'une des revendications 1 à 7, **caractérisé en ce que** la feuille A est positionnée sur une vitre, puis recouverte par au moins une feuille B sur laquelle on pose une deuxième vitre.

9. Procédé selon l'une des revendications 1 à 8, **caractérisé en ce que** la feuille A est mise en contact au moins une feuille B, et l'empilement de feuilles ainsi obtenu est positionné entre deux vitres.

10. Procédé selon l'une des revendications 1 à 9, **caractérisé en ce que** la feuille A présente, sur sa face entrant en contact avec la vitre, une rugosité de surface Rz représentant au maximum 20 % de son épaisseur.

11. Procédé selon l'une des revendications 1 à 10, **caractérisé en ce que** la feuille B présente un répartition des épaisseurs en forme de cale.

12. Procédé selon l'une des revendications 1 à 11, **caractérisé en ce que** ladite feuille B comporte une zone colorée en forme de cale.
